(19)

**Europäisches Patentamt**
**European Patent Office**
**Office européen des brevets**

(11)  **EP 4 481 358 A1**

(12)  **EUROPEAN PATENT APPLICATION**
published in accordance with Art. 153(4) EPC

(43) Date of publication:
25.12.2024 Bulletin 2024/52

(51) International Patent Classification (IPC):
*G01M 13/00* (2019.01)

(21) Application number: 23901892.2

(22) Date of filing: 06.02.2023

(52) Cooperative Patent Classification (CPC):
G01D 21/02; G01M 13/00; G06F 18/10;
G06F 18/213; G06F 18/24; G06F 18/25

(86) International application number:
PCT/CN2023/074531

(87) International publication number:
WO 2024/124672 (20.06.2024 Gazette 2024/25)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 13.12.2022 CN 202211595269

(71) Applicant: China Railway Engineering Equipment
Group Co., Ltd.
Zhengzhou, Henan 450016 (CN)

(72) Inventors:
• JIA, Lianhui
Zhengzhou, Henan 450016 (CN)
• JIANG, Lijie
Zhengzhou, Henan 450016 (CN)
• WEN, Yongliang
Zhengzhou, Henan 450016 (CN)

• SUN, Zhihong
Zhengzhou, Henan 450016 (CN)
• ZHENG, Yongguang
Zhengzhou, Henan 450016 (CN)
• WANG, Heng
Zhengzhou, Henan 450016 (CN)
• XU, Jiaojiao
Zhengzhou, Henan 450016 (CN)
• LI, Mingze
Zhengzhou, Henan 450016 (CN)
• ZHANG, Pei
Zhengzhou, Henan 450016 (CN)
• WANG, Ruoyu
Zhengzhou, Henan 450016 (CN)

(74) Representative: Mannucci, Michele et al
Ufficio Tecnico
Ing. A. Mannucci S.r.l.
Via della Scala, 4
50123 Firenze (IT)

(54) **FAULT DIAGNOSIS METHOD FOR TUNNEL BORING DEVICE AND INTELLIGENT TUNNEL BORING DEVICE**

(57) A fault diagnosis method for a tunneling equipment and an intelligent tunneling equipment are provided. The fault diagnosis method includes: step S1: respectively acquiring operational data of a plurality of working systems of the tunneling equipment by means of a plurality of intelligent sensing terminals; step S2: preprocessing the operational data; step S3: performing feature analysis on preprocessed operational data to obtain state feature data; and step S4: perform a calculation on the state feature data by using a plurality of fault models, and performing weight matching on fault diagnosis parameters output by each fault model to obtain a fused fault diagnosis parameter.

Fig. 1

EP 4 481 358 A1

**Description**

CROSS-REFERENCE TO RELATED APPLICATIONS

The present application is based on and claims priority to CN Patent Application No. 202211595269.X filed on December 13, 2022, the disclosure of which is incorporated by reference herein in its entirety.

TECHNICAL FIELD

The present disclosure relates to the field of tunnel excavation, in particular to a fault diagnosis method for a tunneling equipment and an intelligent tunneling equipment.

BACKGROUND

As underground engineering equipment, a large-scale tunneling equipment has the characteristics of a long overall length, a large buried depth and no retreat. The main drive system (a main drive seal, a main bearing, a reducer, and the like) and the hydraulic system (a pump, a motor, and the like) are the core power systems of the whole machine, and its safe operation mainly depends on safe environment by the main drive seal and the shield tail seal to isolate external geotechnical structures. The complex structure of a large-scale tunneling equipment causes the problems of high maintenance cost, long overhaul time and difficult troubleshooting at the same time. Once its key members/systems fail, it is very difficult to replace and repair them. For this reason, enterprises have to strengthen maintenance/service and manual supervision, which leads to an abnormally high operation and maintenance cost of a large-scale tunneling equipment.

At present, in the state-aware technology of a tunneling equipment, the operation of the core members of a large tunneling equipment involves complex thermal-fluid-solid Multiphysics coupling, and its actual operation conditions are intricate and volatile. It has always been a tough aspect in the industry to on-line monitor the key parameters of the core members. There is still a lack of an effective on-line sensing and measuring method for the effective state quantities of the main drive core members, which makes it difficult to accurately, comprehensively and in real time evaluate the running state of the main drive key members of a large-scale tunneling equipment, which significantly restricts the improvement of its fault prediction and diagnosis ability and intelligent development.

In the aspect of a monitoring and diagnosis algorithm, general attention has been paid to the monitoring and diagnosis technology of a tunneling equipment at home and abroad. However, the key members of a tunneling equipment are under severe operation conditions such as strong vibration, strong alternating load and variable rotating speed, which leads to a weak generalization ability of the main drive system, the hydraulic element and the system diagnosis algorithm, so that they cannot be applied to in-site conditions. There is an urgent need to develop a state early warning method of a tunneling equipment fused with multiple early warning means to realize predictive maintenance of a tunneling equipment.

SUMMARY

In view of this, the embodiment of the present disclosure provides a fault diagnosis method for a tunneling equipment and an intelligent tunneling equipment, which can improve the fault prediction and diagnosis ability and intelligent level of the tunneling equipment under complex in-site conditions.

In one aspect of the present disclosure, a fault diagnosis method for a tunneling equipment is provided. The method includes: step S1: respectively acquiring operational data of a plurality of working systems of the tunneling equipment by means of a plurality of intelligent sensing terminals; step S2: preprocessing the operational data; step S3: performing feature analysis on preprocessed operational data to obtain state feature data; and step S4: perform a calculation on the state feature data by using a plurality of fault models, and performing weight matching on fault diagnosis parameters output by each fault model to obtain a fused fault diagnosis parameter.

In some embodiments, the step S2 includes: step S21: filtering out a data portion corresponding to an abnormal working state from the operational data to obtain an operational data of a working process; and step S22 : screening out operational data corresponding to a stable phase of the tunneling equipment during a tunneling process from the operational data of the working process.

In some embodiments, in the step S21, when any data of a total thrust force, a thrust speed, a cutterhead torque and a cutterhead rotation speed of the tunneling equipment are abnormal, it is determined that the operational data pertains to the data portion corresponding to the abnormal working state.

In some embodiments, in the step S22, when a standard deviation of the cutterhead rotation speed and a standard deviation of the total thrust force both meet standard deviation threshold requirements, it is determined that the operational data pertains to the operational data corresponding to the stable phase of the tunneling equipment during the tunneling process.

In some embodiments, the step S2 further includes: step S23: detecting an outlier in the operational data corresponding to the stable phase, eliminating the outliers and supplementing missing values.

In some embodiments, the step S3 includes: step S31: performing at least one of time domain analysis, frequency domain analysis and time-frequency domain analysis on high-frequency data in the preprocessed operational data and performing time domain analysis on low-frequency data in the preprocessed operational data, so as to construct a time domain feature set and a frequency domain feature set.

In some embodiments, the step S3 further includes: step S32: performing dimension reduction on the time domain feature set and the frequency domain feature set for optimization, so as to screen out fault-sensitive state features to construct a fault-sensitive state feature set.

In some embodiments, the step S4 includes: step S41: calculating an error mean and a variance of a fusion confidence according to a confidence corresponding to each fault in the working system calculated by the plurality of fault models and a weight allocated to each fault model; step S42: determining the weights corresponding to the plurality of fault models respectively in the case where a condition of a minimum variance of the fusion confidence is satisfied; and step S43: performing a weighted calculation according to the fault diagnosis parameters output by the plurality of fault models and determined weights corresponding to the plurality of fault models respectively, so as to obtain fused fault diagnosis parameters.

In some embodiments, the plurality of fault models include an expert knowledge-based diagnostic reasoning model and a big data-driven neural network for diagnosis and prediction.

In some embodiments, the fault diagnosis method further includes: judging whether the state feature data and the fused fault diagnosis parameters conform to an alarm threshold set by a rule-based state alarm model, and performing alarming by a visual terminal when the alarming threshold is exceeded.

In one aspect of the present disclosure, an intelligent tunneling equipment is provided. The device includes: a plurality of working systems; a plurality of intelligent sensing terminals respectively corresponding to the plurality of working systems, and configured to acquire the operational data of a corresponding working system and preprocess the operational data; and an edge processing server communicatively connected with the plurality of intelligent sensing terminals, and configured to perform feature analysis on the preprocessed operational data to obtain state feature data, perform a calculation on the state feature data by using a plurality of fault models, and perform weight matching on fault diagnosis parameters output by the fault models to obtain fused fault diagnosis parameters.

In some embodiments, the plurality of working systems include at least one of a cutterhead system, a main drive system, a hydraulic system, a segment assembly system, a thrust system and a slag discharging system.

In some embodiments, the cutterhead system includes: a cutterhead and a cutterhead data acquiring unit for acquiring operational data of the cutterhead; and a cutter and a cutter data acquiring unit for acquiring operational data of the cutter.

In some embodiments, the cutterhead data acquiring unit includes a main control room controller for acquiring at least one of a cutterhead rotation speed, a cutterhead torque and thrust information; and the cutter data acquiring unit includes: at least one of a cutter rotation speed sensor, a cutter wear sensor and a cutterhead temperature sensor.

In some embodiments, the main drive system includes: a main bearing and a main bearing data acquiring unit for acquiring operational data of the main bearing; a main drive electric motor and an electric motor data acquiring unit for acquiring operational data of the main drive electric motor; a main reducer and a reducer data acquiring unit for acquiring operational data of the main reducer; a lubricant supply mechanism and a lubricant data acquiring unit for acquiring operational data of a lubricant; and a main drive seal and a seal data acquiring unit for acquiring operational data of the main drive seal.

In some embodiments, the main bearing data acquiring unit includes: at least one of a bearing inner ring displacement sensor, a radial roller vibration sensor, a thrust roller vibration sensor, a reverse thrust roller vibration sensor, a bearing temperature sensor, a stress-strain sensor and a bearing rotation speed sensor; the electric motor data acquiring unit includes: a main control room controller for acquiring at least one of an electric motor current and an electric motor temperature, and an electric motor vibration sensor; the main reducer data acquiring unit includes: a main control room controller for acquiring a temperature of the main reducer, and a reducer vibration sensor; the lubricant data acquiring unit includes a lubricant sensor; the seal data acquiring unit includes: at least one of a seal track thickness measurement sensor, a seal cavity internal temperature and pressure sensor, a seal member wear measurement sensor and a seal maze clearance measurement sensor.

In some embodiments, the hydraulic system includes: a hydraulic pump and a hydraulic pump data acquiring unit for acquiring operational data of the hydraulic pump; a hydraulic pump electric motor and a hydraulic pump electric motor acquiring unit for acquiring operational data of the hydraulic pump electric motor; a hydraulic oil data acquiring unit for acquiring operational data of hydraulic oil; and a control valve and a control valve data acquiring unit for acquiring operational data of the control valve.

In some embodiments, the hydraulic pump data acquiring unit includes: at least one of a vibration sensor, a pressure pulse sensor and a low-frequency pressure sensor which are mounted on the hydraulic pump; the hydraulic pump electric motor acquiring unit includes: a vibration sensor mounted on the hydraulic pump electric motor; the hydraulic oil data acquiring unit includes a hydraulic oil sensor; and the control valve data acquiring unit includes a valve controller.

In some embodiments, the segment assembly system includes: an assembling hydraulic motor and an assembling motor data acquiring unit for acquiring operational data of the assembling hydraulic motor; an assembling drive electric motor and an assembling electric motor data acquiring unit for acquiring operational data of the assembling drive electric motor; and an assembling reducer and an assembling reducer data acquiring unit for acquiring operational data of the assembling reducer.

In some embodiments, the assembling motor data acquiring unit includes: at least one of a vibration sensor, a pressure pulse sensor and a low-frequency pressure sensor which are mounted on the assembling motor; the assembling electric motor data acquiring unit includes: a main control room controller for acquiring at least one of an electric motor current and an electric motor temperature of the assembling drive electric motor, and an assembling electric motor vibration sensor; the assembling reducer data acquiring unit includes: a main control room controller for acquiring an assembling reducer temperature, and an assembling reducer vibration sensor.

In some embodiments, the thrust system includes: a thrust cylinder and a thrust data acquiring unit for acquiring operational data of the thrust cylinder.

In some embodiments, the thrust data acquiring unit includes: at least one of a cylinder stroke sensor and a cylinder pressure sensor.

In some embodiments, the slag discharging system includes: a screw conveyor and a screw conveying data acquiring unit for acquiring operational data of the screw conveyor; and a belt conveyor and a belt conveying data acquiring unit for acquiring operational data of the belt conveyor.

In some embodiments, the screw conveying data acquiring unit includes: at least one of a wear sensor, a gate displacement sensor and a gate pressure sensor; and the belt conveying data acquiring unit includes: at least one of a deviation detection sensor and a vibration sensor mounted on the belt conveyor.

In some embodiments, the intelligent sensing terminal includes: a data collection module configured to acquire operational data of a corresponding working system through a plurality of communication protocols and adjust data collection parameters of the corresponding working system; and a data preprocessing module configured to preprocess the operational data.

In some embodiments, the data preprocessing module includes: an abnormality filtering unit configured to filter out a data portion corresponding to an abnormal working state from the operational data to obtain an operational data during a working process; and a stable phase screening unit configured to screen out operational data corresponding to a stable phase of the tunneling equipment during a tunneling process from the operational data of the working process .

In some embodiments, the abnormality filtering unit is configured to: determine that the operational data pertains to the data portion corresponding to the abnormal working state when any data of a total thrust force, a thrust speed, a cutterhead torque and a cutterhead rotation speed of the tunneling equipment are abnormal.

In some embodiments, the stable phase screening unit is configured to: determine that the operational data pertains to the operational data corresponding to the stable phase of the tunneling equipment during the tunneling process when a standard deviation of the cutterhead rotation speed and a standard deviation of the total thrust force both meet standard deviation threshold requirements.

In some embodiments, the intelligent sensing terminal further includes : an outlier processing module configured to detect an outlier in the operational data corresponding to the stable phase, eliminate the outliers and supplement missing values.

In some embodiments, the edge processing server includes: a state feature extraction module configured to perform feature analysis on the preprocessed operational data to obtain state feature data; and a fault model calculation module configured to perform a calculation on the state feature data by using a plurality of fault models, and perform weight matching on fault diagnosis parameters output by each fault model to obtain a fused fault diagnosis parameter.

In some embodiments, the state feature extraction module includes: a data analysis unit configured to perform at least one of time domain analysis, frequency domain analysis and time-frequency domain analysis on high-frequency data in the preprocessed operational data, and perform time domain analysis on low-frequency data in the preprocessed operational data, so as to construct a time domain feature set and a frequency domain feature set.

In some embodiments, the state feature extraction module further includes: a data optimization unit configured to perform dimension reduction on the time domain feature set and the frequency domain feature set for optimization so as to screen out fault-sensitive state features to construct a fault-sensitive state feature set.

In some embodiments, the fault model calculation module is configured to calculate an error mean and a variance of a fusion confidence according to a confidence corresponding to each fault in the working system calculated by the plurality of fault models and a weight assigned to each fault model, and determine the weights corresponding to the plurality of fault models respectively in the case where a condition of a minimum variance of the fusion confidence is satisfied, and then performing a weighted calculation according to the fault diagnosis parameters output by the plurality of fault models and determined weights respectively corresponding to the plurality of fault models to obtain fused fault diagnosis parameters.

In some embodiments, the plurality of fault models include an expert knowledge-based diagnostic reasoning model and a big data-driven neural network for diagnosis and prediction.

In some embodiments, the edge processing server further includes: a state alarm module configured to judge whether the state feature data and the fused fault diagnosis parameters conform to an alarm threshold set by a rule-based state alarm model, and perform alarming by a visual terminal when the alarm threshold is exceeded.

In some embodiments, the intelligent tunneling equipment further includes: a visualization terminal communicatively connected with the edge processing server and configured to display the operational data, provide diagnostic information and/or send an alarm.

Therefore, according to the embodiment of the present disclosure, the operational data of a plurality of working systems of a tunneling equipment are acquired through corresponding intelligent sensing terminals respectively, which may communicate with sensors of corresponding working systems to acquire the operational data of the working system itself and members contained in the working system at a specific frequency or duration. The operational data is preprocessed before feature analysis so that it is possible to eliminate abnormal or greatly fluctuating parts in the operational data acquired under complex in-site conditions, and improve the accuracy of feature analysis. During fault diagnosis, the state feature data is calculated through a plurality of models, and a fusion result is acquired through weighted fusion to incorporate the advantages of a plurality of models, thereby effectively improving the fault prediction and diagnosis ability and intelligent level of a tunneling equipment under complex in-site conditions.

## BRIEF DESCRIPTION OF THE DRAWINGS

The accompanying drawings which constitute part of this specification, describe the embodiments of the present disclosure, and together with this specification, serve to explain the principles of the present disclosure.

The present disclosure may be more explicitly understood from the following detailed description with reference to the accompanying drawings, in which:

Fig. 1 is a schematic flowchart of some embodiments of a fault diagnosis method for a tunneling equipment according to the present disclosure;

Fig. 2 is a schematic flowchart of preprocessing the operational data in an embodiment of a fault diagnosis method for a tunneling equipment according to the present disclosure;

Fig. 3 is a schematic flowchart of feature analysis on the operational data in an embodiment of a fault diagnosis method for a tunneling equipment according to the present disclosure;

Fig. 4 is a schematic flowchart of model processing in an embodiment of a fault diagnosis method for a tunneling equipment according to the present disclosure;

Fig. 5 is a schematic structural view of some embodiment of an intelligent tunneling equipment accord to the present disclosure.

It should be understood that the dimensions of various parts shown in the accompanying drawings are not drawn according to actual proportional relations. In addition, the same or similar members are denoted by the same or similar reference signs.

## DETAILED DESCRIPTION

Various exemplary embodiments of the present disclosure will now be described in detail with reference to the accompanying drawings. The description of the exemplary embodiments is merely illustrative and is in no way intended as a limitation to the present disclosure, its application or use. The present disclosure may be implemented in many different forms, which are not limited to the embodiments described herein. These embodiments are provided to make the present disclosure thorough and complete, and fully convey the scope of the present disclosure to those skilled in the art. It should be noticed that: relative arrangement of members and steps, material composition, numerical expressions, and numerical values set forth in these embodiments, unless specifically stated otherwise, should be explained as merely illustrative, and not as a limitation.

The use of the terms "first", "second" and similar words in the present disclosure do not denote any order, quantity or importance, but are merely used to distinguish between different parts. A word such as "comprise", "include" or variants thereof means that the element before the word covers the element(s) listed after the word without excluding the possibility of also covering other elements. The terms "up", "down", "left", "right", or the like are used only to represent a relative positional relationship, and the relative positional relationship may also be changed correspondingly if the absolute position of the described object changes.

In the present disclosure, when it is described that a particular device is located between the first device and the second device, there may be an intermediate device between the particular device and the first device or the second device, and alternatively, there may be no intermediate device. When it is described that a particular device is connected to other devices, the particular device may be directly connected to said other devices without an intermediate device, and alternatively, may not be directly connected to said other devices but with an intermediate device.

All the terms (including technical and scientific terms) used in the present disclosure have the same meanings as understood by those skilled in the art of the present disclosure unless otherwise defined. It should also be understood that terms as defined in general dictionaries, unless explicitly defined herein, should be interpreted as having meanings that are consistent with their meanings in the context of the relevant art, and not to be interpreted in an idealized or extremely formalized sense.

Techniques, methods, and apparatus known to those of ordinary skill in the relevant art may not be discussed in detail, but where appropriate, these techniques, methods, and apparatuses should be considered as part of this specification.

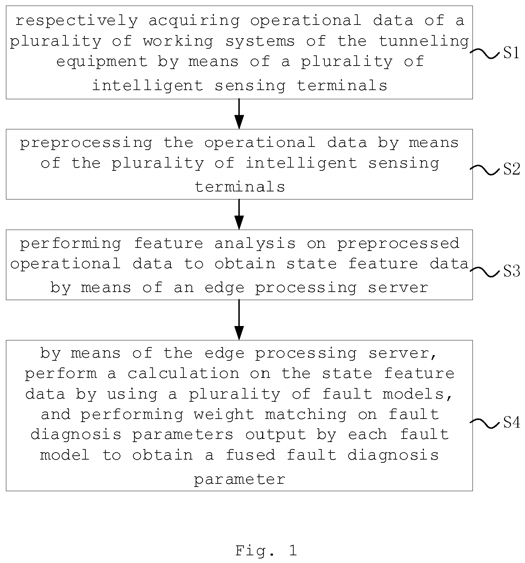

Fig. 1 is a schematic flowchart of some embodiments of a fault diagnosis method for a tunneling equipment according to the present disclosure. Referring to Fig. 1, the embodiment of the present disclosure provides a fault diagnosis method for a tunneling equipment, which includes: steps S1 to S4. In step S1, operational data of a plurality of working systems of the tunneling equipment are respectively acquired by means of a plurality of intelligent sensing terminals. In step S2, the operational data is preprocessed. In step S3, feature analysis is performed on the preprocessed operational data to obtain state feature data. In step S4, calculation is performed on the state feature data by using a plurality of fault models, and weight matching is performed on fault diagnosis parameters output by each fault model to obtain a fused fault diagnosis parameter.

In this embodiment, the operational data of a plurality of working systems of the tunneling equipment are respectively acquired by means of corresponding intelligent sensing terminals, which may communicate with sensors of corresponding working systems to acquire the operational data of the working system itself and members contained in the working system at a specific frequency or duration. The operational data is preprocessed before feature analysis so that it is possible to eliminate abnormal or greatly fluctuating parts in the operational data acquired under complex in-site conditions, and improve the accuracy of feature analysis. During fault diagnosis, the state feature data is calculated through a plurality of models, and a fusion result is acquired through weighted fusion to incorporate the advantages of a plurality of models, thereby effectively improving the fault prediction and diagnosis ability and intelligent level of a tunneling equipment under complex in-site conditions.

The tunneling equipment has a plurality of key members, and a plurality of working systems of the tunneling equipment may be determined by the key members. For example, for full-face tunneling equipment, its plurality of working systems may include at least one of a cutterhead system, a main drive system, a hydraulic system, a segment assembly system, a thrust system and a slag discharging system.

The cutterhead system may include a cutterhead and a cutter mounted on the cutterhead. The operational data corresponding to the cutterhead may include: at least one of a cutterhead rotation speed, a cutterhead torque and thrust information, which may be acquired by a sensor or by a controller in a main control room of the tunneling equipment. The operational data corresponding to the cutter may include: at least one of a cutter rotation speed, a cutter wear and a cutterhead temperature, which may be acquired by various sensors.

The main drive system may include a main bearing, a main drive electric motor, a main reducer, a main drive seal, a lubricant supply mechanism, etc. The operational data corresponding to the main bearing may include: at least one of the axial vibration information of the bearing inner ring, radial vibration of the bearing outer ring, axial vibration of the bearing outer ring, a bearing temperature, a bearing stress-strain and a bearing rotation speed, which may be acquired by various sensors. The operational data corresponding to the main drive electric motor may include: at least one of a motor current, a motor temperature and electric motor vibration of the main drive electric motor, wherein the motor current and the motor temperature of the main drive electric motor may be acquired by sensors or by a controller in a main control room, and the motor vibration information may be acquired by sensors.

The operational data corresponding to the main reducer may include: at least one of vibration and a temperature of the main reducer, wherein the vibration may be acquired by sensors, the temperature may be acquired by sensors, or by a controller in a main control room. The operational data corresponding to the main drive seal may include at least one of a seal runway thickness, a seal cavity temperature and pressure, a seal wear and a seal labyrinth clearance of the main drive seal, which may be acquired by various sensors. The operational data corresponding to the lubricant supply mechanism may include: at least one of ferromagnetic abrasive particle content, water content, contamination degree, viscosity and a temperature in the lubricant. These data may be acquired by sensors.

The hydraulic system may include a hydraulic pump, a hydraulic pump electric motor and a control valve for thrust, support shoes, etc. The operational data corresponding to the hydraulic pump may include: at least one of vibration of the hydraulic pump and pressure fluctuation of hydraulic oil in the hydraulic pump, which may be acquired by sensors. The operational data corresponding to the hydraulic pump electric motor may include: vibration of the hydraulic pump electric motor, which may be acquired by sensors . The operational data corresponding to the control valve may include a spool displacement and a control instruction of the control valve, which may be acquired by the valve controller. The operational data of the hydraulic system may also include at least one of viscosity, a temperature, contamination degree and ferromagnetic particle content of the hydraulic oil, which may be acquired by sensors.

The segment assembly system may include: an assembling oil cylinder, an assembling hydraulic motor, an assembling drive electric motor and an assembling reducer. The operational data corresponding to the assembling hydraulic motor may include at least one of vibration of the assembling hydraulic motor and pressure fluctuation of hydraulic oil in the assembling hydraulic motor, which may be acquired by sensors . The operational data corresponding to the assembling drive electric motor may include at least one of an electric motor current, an electric motor temperature and electric motor vibration of the assembling drive electric motor, wherein the electric motor current and the electric motor temperature of the assembling drive electric motor may be acquired by sensors or by a controller in a main control room, and the motor vibration information may be acquired by sensors . The operational data corresponding to the assembling reducer may include: at least one of vibration and a temperature of the assembling reducer, wherein the vibration may be acquired by sensors, and the temperature may be acquired by sensors or by a controller in a main control room.

The thrust system may include a thrust cylinder. The operational data corresponding to the thrust cylinder may include at least one of a displacement stroke of the thrust cylinder and a pressure of a rod end cavity/a cap end cavity, which may be acquired by sensors. The slag discharging system may include a screw conveyor and a belt conveyor. The operational data corresponding to the screw conveyor may include at least one of a shell thickness of the screw conveyor, a gate opening and closing amount and a gate pressure, which may be acquired by sensors. The operational data corresponding to the belt conveyor may include at least one of vibration of the electric motor/reducer of the belt conveyor and the belt deviation of the belt conveyor, which may be acquired by sensors.

It is to be noted that, for different tunneling equipments, the working systems involved may be different, and the members contained in the working system and the types of collected operational data are also different, which are not limited to the above examples of the working system and their constituent parts and corresponding operational data.

A plurality of communication protocols may be set in the intelligent sensing terminal to collect different types of operational data and write them into the same data file. The intelligent sensing terminal may adjust data collection parameters of its corresponding working system according to the settings, for example, using different collection frequencies and durations for different sensors. In this way, it is possible to avoid the problem that different types of sensors need different devices such as collectors and gateways at present, which is conductive to the standardization of data collection.

The intelligent sensing terminal may have a certain edge calculation ability, so as to preprocess the acquired operational data in step S2. The preprocessing method of the operational data may be set according to actual conditions of the data, so as to eliminate the anomalies and noises in the operational data.

In some embodiments, the operational data acquired by the intelligent sensing terminal includes not only unique data of corresponding working systems, for example, vibration, pressure, stress-strain, but also common data of each working system, for example, geology, tunnel boring machine thrust, cutterhead rotation speed and cutterhead torque. A large amount of data produced during tunnel boring is inevitably present with abnormal data and data in some special tunnel boring states, which have a negative impact on the diagnosis effect of the tunneling equipment. Therefore, when the operational data is preprocessed, it is possible to filter out the abnormal data and screen out the operational data of a stable phase during a tunneling process.

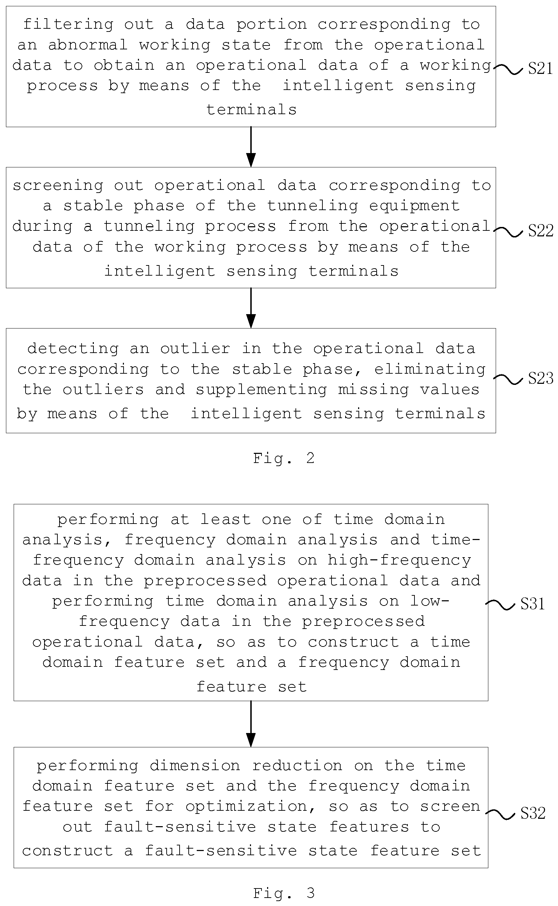

Fig. 2 is a schematic flowchart of preprocessing the operational data in an embodiment of a fault diagnosis method for a tunneling equipment according to the present disclosure. Referring to Fig. 2, in some embodiments, step S2 in Fig. 1 may include step S21 and step S22. In step S21, a data portion corresponding to an abnormal working state is filtered out from the operational data to obtain the operational data of the working process.

Considering that during the process of the tunneling equipment, besides normal tunnel boring, there is still a period of time in an abnormal working state, for example, daily maintenance, cutter replacement, downtime maintenance, abnormal shutdown and the like. These conditions pertain to an abnormal working state, and their data occupy a large proportion, which lacks value for fault diagnosis of each working system. These data are blended with the data of a normal working state, so that the data portion corresponding to abnormal working state is filtered out.

By using the characteristics that some key members stop running in an abnormal working condition, when any data of a total thrust force, a thrust speed, a cutterhead torque and a cutterhead rotation speed of the tunneling equipment is abnormal, it may be determined that the operational data pertains to the data portion corresponding to an abnormal working condition, thereby conveniently filtering these portions of data.

For example, the following discriminant function is used:

$$d(x) = \begin{cases} 1, & (x > 0) \\ 0, & (x \leq 0) \end{cases} \qquad (1)$$

$$D = d(F) \cdot d(v) \cdot d(T) \cdot d(n) \qquad (2)$$

$$Status = \begin{cases} Normal, & (D = 1) \\ Abnormal, & (D \leq 0) \end{cases} \qquad (3)$$

In the expression (2), *F, v, T, n* are a total thrust force, a thrust speed, a cutterhead torque and a cutterhead rotation speed of the tunneling equipment respectively. The expression (1) is a binary discriminant function, where it is indicated that the data is a normal working state value when x>0, and x≤0 has two conditions, in which it is indicated that it is the abnormal working state data when x=0, and it is indicated that the sensor data is abnormally negative when x<0. The working state of the tunneling equipment may be judged by the product of a binary discriminant function of four parameters, and this data portion may be filtered when there is abnormal working state data.

In step S22, the operational data corresponding to a stable phase of the tunneling equipment during the tunneling process are screened out from the operational data of the working process.

Considering that the working process of the tunneling equipment may be divided into an empty thrust phase, an ascending phase, a stable phase and a descending phase in sequence, wherein the running state of the whole machine in the stable phase fluctuates slightly and the work of each system tends to be balanced, it is possible to set each intelligent sensing terminal to start working in the stable phase of the tunneling equipment so as to obtain unique data and common data of each system in the stable phase.

The stable phase may be judged by using a standard deviation method, a mean discriminant method and a histogram method. Taking the standard deviation method as an example, since the ascending phase has a continuously increased thrust speed v, its standard deviation $\sigma$ is large, while the stable phase has a low fluctuation in the thrust speed, and the standard deviation $\sigma$ is substantially maintained to be stable. Therefore, with the standard deviations of the cutterhead rotation speed n and the total thrust force F as a discriminant basis, when the standard deviation of the cutterhead rotation speed and the standard deviation of the total thrust force both meet the standard deviation threshold requirements, it is determined that the operational data pertains to the operational data corresponding to a stable phase of the tunneling equipment during the tunneling process.

With the start-up moment of the cutterhead marked as $t_0$, the standard deviations of the rotating speed and the total thrust force F are calculated once at an interval of $\triangle t$ to obtain $\sigma_n$ and $\sigma_F$, and allowable errors $\varepsilon_n$ and $\varepsilon_F$ are set. If $\sigma_n \leq \varepsilon_n$ or $\sigma_F \leq \varepsilon_F$, it is considered that the tunneling equipment is in the stable phase.

Referring to Fig. 2, in some embodiments, the step S2 may further include step S23. In step S23, an outlier in the operational data corresponding to the stable phase is detected, and the outlier is eliminated and missing values are supplemented.

The operational data obtained from the stable phase is actually a data set of all types of tunnel boring data at the collection time interval $\triangle t$, including some outliers therein due to disturbance in sensor collection or data transmission, which need to be detected, eliminated and supplemented. Considering that the operational data in the stable phase is substantially in normal distribution, Pauta criterion (3 $\sigma$ criterion) is used in implementation here.

Taking the main drive pressure data as an example, the data set of a period T collected at the time interval $\triangle t$ is $y = (x_1, x_2, \cdots, x_n)$, and its arithmetic mean $\overline{x}$, standard deviation $\sigma$ and residual error $x_i$ are calculated. When a certain measured value $x_i$ satisfies the expression (4), it is considered that $x_i$ is an outlier with error. Then, it may be eliminated from the original data set and replaced by the arithmetic mean $\overline{x}$ to obtain a new data set $y_{new}$.

$$|x_i - \overline{x}| > 3\sigma, \sigma = \sqrt{\frac{\sum_{i=1}^{N}(x_i - \overline{x})^2}{N}} \qquad (4)$$

Fig. 3 is a schematic flowchart of feature analysis on the operational data in an embodiment of a fault diagnosis method for a tunneling equipment according to the present disclosure. Referring to Fig. 3, in some embodiments, step S3 in Fig. 1 may include step S31. In step S31, at least one of time domain analysis, frequency domain analysis and time-frequency domain analysis is performed on high-frequency data in the preprocessed operational data, and time domain analysis is performed on low-frequency data in the preprocessed operational data so as to construct a time domain feature set and a frequency domain feature set.

After preprocessing, the operational data contains both high-frequency data (for example, vibration data and pressure pulse data) and low-frequency data (for example, temperature, thrust, cutterhead rotation speed, current, pressure, etc.). At least one of time domain analysis, frequency domain analysis and time-frequency domain analysis may be performed on high-frequency data. For example, the time domain characteristics such as mean, standard deviation, root amplitude, peak value, peak-to-peak value and kurtosis are calculated. Fast Fourier transform is performed on time domain data to obtain frequency spectrum data, and frequency domain characteristics of the frequency spectrum data, such as overall amplitude, first harmonic amplitude, second harmonic amplitude, half-harmonic amplitude, and bearing or gear fault frequency are calculated; after the envelope spectrum transformation of the time domain data, the frequency domain characteristics of the envelope spectrum signal, such as overall amplitude, first harmonic amplitude, second harmonic amplitude, half-harmonic amplitude, and bearing or gear fault frequency, are calculated. For low-frequency data, time domain analysis may be performed, for example, calculating mean value, maximum value, root mean square value, root mean square amplitude, peak value, peak-to-peak value and so on.

State feature data sets $\varnothing = \{C_t, C_F\}$ may be constructed for each member of each working system respectively, where $C_T$ represents the time domain feature set and $C_F$ represents the frequency domain feature set. After the time domain feature set and the frequency domain feature set are obtained, in some embodiments, the step S3 may further include step S32. In step S32, dimension reduction is performed on the time domain feature set and the frequency domain feature set for optimization so as to screen out fault-sensitive state features to construct a fault-sensitive state feature set.

Specifically, dimension reduction may be performed on the feature set by using a distance evaluation method or a principal component analysis method, and the sensitivity of features to fault classification and identification may be fully considered to screen out fault-sensitive features, so as to construct a fault-sensitive state feature set $\varnothing_1$ and perform data storage.

Taking the state feature extraction of the main drive system as an example, the algorithm principles of the distance evaluation method are as follows: assume that there are c types (time domain, frequency domain and time-frequency domain) of feature sets $w_1, w_2, w_3, \cdots, w_c$.

$$\{p_{c,m,k} = 1, 2, \cdots, C;\ m = 1, 2, \cdots, M_c;\ k = 1, 2, \cdots, K\} \tag{5}$$

In the expression (5), $p_{c,m,k,c}$ is the k-th feature of the m-th sample in the class c state; $M_c$ is the total number of samples in the c state; K is the number of features per sample. In the class c state, $M_c$ samples may be obtained, so that a total of $M_c \times C$ sample sets may be obtained. Thus, $M_c \times C \times K$ features are obtained, which are defined as $\{p_{c,m,k,c}\}$.

① All the feature vectors in the class $M_c \times C$ are calculated.

$$d_{c,k} = \frac{1}{M_c(M_c - 1)} \sum_{i=1}^{M_c} \sum_{j=1}^{M_c} \left| p_{c,i,k} - p_{c,j,k} \right| \tag{6}$$

$d_{c,k}(c = 1, 2, \cdots, C)$ is averaged to obtain an average intra-class distance $\quad d_k^w = \frac{1}{C} \sum_{c=1}^{C} d_{c,k}$ .

② The variance factor $\upsilon_k^w$ of $d_k^w$ and the inter-class distance $d_k^b$ of C model classes are defined and calculated.

$$\upsilon_k^w = \frac{\max(d_{c,k})}{\min(d_{c,k})} , \qquad d_k^b = \frac{1}{C(C-1)} \sum_{c=1}^{C} \sum_{e=1}^{C} \left| u_{e,k} - u_{c,k} \right| \tag{7}$$

$$u_{c,k} = \frac{1}{M_c} \sum_{m=1}^{M_c} P_{c,m,k}$$

In the expression, is the average of all the k-th features in the class $w_c$.

③ The variance factor $\upsilon_k^b$ and the compensation factor $\gamma_k$ are defined and calculated.

$$\upsilon_k^b = \frac{\max(|u_{e,k} - u_{c,k}|)}{\min(|u_{e,k} - u_{c,k}|)} , \qquad \gamma_k = \frac{1}{\dfrac{\upsilon_k^w}{\max(\upsilon_k^w)} + \dfrac{\upsilon_k^b}{\max(\upsilon_k^b)}} \qquad (8)$$

④ The ratio of the inter-class distance $d_k^b$ to the intra-class distance $d_k^w$ is calculated.

$$a_k = \gamma_k \frac{d_k^b}{d_k^w} \qquad (9)$$

$a_k$ is normalized to obtain the compensation distance evaluation index.

$$\overline{a}_k = \frac{a_k}{\max(a_k)} \qquad (10)$$

According to the compensation distance evaluation index $\overline{a}_k$ of each characteristic, its threshold $\phi$ is set, and the k-dimensional feature sensitive to the class n fault identification is retained, and the feature set is updated to Ø1. The dimension of the feature may be apparently reduced, but the objective function of the compensation distance evaluation ensures that the fault information contained in the dimension reduced feature substantially conforms to the full feature set, that is, the dimension reduced optimization of the feature is realized, and the calculation efficiency of the diagnosis may be improved. After the sensitivity evaluation processing by the distance evaluation method, the fault-sensitive state feature set constructed by fault-sensitive state features may be applied in subsequent fault diagnosis.

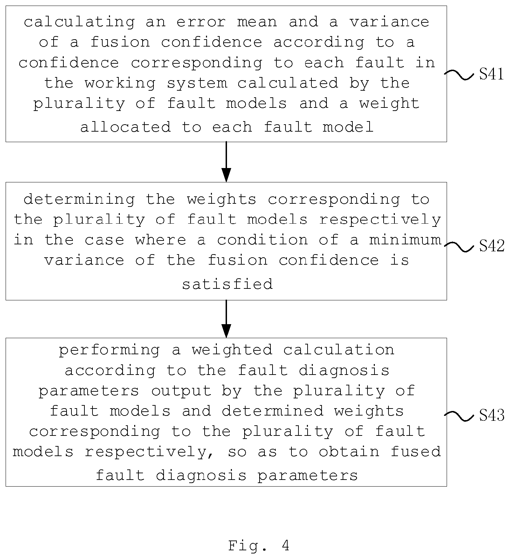

Fig. 4 is a schematic flowchart of model processing in an embodiment of a fault diagnosis method for a tunneling equipment according to the present disclosure. Referring to Fig. 4, in some embodiments, the step S4 described in Fig. 1 may include steps S41 to S43. In step S41, the error mean and the variance of the fusion confidence are calculated according to a confidence corresponding to each fault in the working system calculated by the plurality of fault models and a weight assigned to each fault model. The plurality of fault models may include a expert knowledge-based diagnostic reasoning model and a big data-driven neural network for diagnosis and prediction. The state feature data may be input into both the diagnostic reasoning model and the neural network for diagnosis and prediction model to perform operation, and the preprocessed operational data may also be input into the neural network for diagnosis and prediction model.

The expert knowledge-based diagnostic reasoning model mainly consists of accumulated or known common fault types of members, feature phenomena corresponding to each fault, inference rules, confidence and feature weights. The fault types, feature phenomena, confidence and weights are in one-to-one correspondence respectively, and the inference rules may use analytic hierarchy process and fault tree method.

The big data-driven neural network for diagnosis and prediction learns and establishes models for historical data and fault phenomena to produce a neural network intelligent diagnosis and prediction model. The available models include Support Vector Machine (SVM) and Back Propagation Neural Networks (BPNN), Region with CNN Feature (R-CNN), or an improved model of SVM, BPNN or R-CNN.

The problems present when the above-described algorithms are arranged singly may be solved by using a plurality of fault models, so as to incorporate the advantages of each model. Weight matching is performed on the output of each model to realize the decision-level fusion of a plurality of models.

In step S42, in the case where the condition of a minimum variance of the fusion confidence is satisfied, the weights corresponding to the plurality of fault models are determined respectively. In step S43, a weighted calculation is performed according to the fault diagnosis parameters output by the plurality of fault models and the determined weights corresponding to the plurality of fault models respectively, so as to obtain fused fault diagnosis parameters.

With the fault diagnosis of the main drive electric motor as an example, processing is performed by using three fault diagnosis models of a fault tree method, SVM and BPNN. If the weights assigned to each model are $w_{i1}$, $w_{i2}$, $w_{i3}$ respectively, the final fusion result for diagnosing one of the main drive electric motor fault categories is $\hat{y} = w_{i1}\hat{y}_{i1} + w_{i2}\hat{y}_{i2} + w_{i3}\hat{y}_{i3}$, and the error mean and the variance of the fusion result (confidence) are respectively:

$$E_i = w_{i1}E_{i1} + w_{i2}E_{i2} + w_{i3}E_{i3} \qquad (11)$$

$$D(E_i) = w_{i1}^2 D(E_{i1}) + w_{i2}^2 D(E_{i2}) + w_{i3}^2 D(E_{i3}) + 2w_{i1}w_{i2}\,\mathrm{cov}(E_{i1}, E_{i2}) + 2w_{i1}w_{i3}\,\mathrm{cov}(E_{i1}, E_{i3}) + 2w_{i2}w_{i3}\,\mathrm{cov}(E_{i2}, E_{i3}) \quad (12)$$

For the diagnosis errors of different diagnosis models, assume that they are independent of each other, that is $\mathrm{cov}(E_i, E_j) = 0$, $\forall i \ne j$, and in order to minimize the error variance of the prediction result, a partial derivative is calculated for $D(E)$.

$$\frac{\partial D(E_i)}{\partial w_{i1}} = \frac{\partial D(E_i)}{\partial w_{i2}} = \frac{\partial D(E_i)}{\partial w_{i3}} = 0 \quad (13)$$

When $w_{i1} + w_{i2} + w_{i3} = 1$ is satisfied, the following results may be obtained.

$$\begin{cases} w_{i1} = \dfrac{1}{1/D(E_{i1})(1/D(E_{i1}) + 1/D(E_{i2}) + 1/D(E_{i3}))} \\[2ex] w_{i2} = \dfrac{1}{1/D(E_{i2})(1/D(E_{i1}) + 1/D(E_{i2}) + 1/D(E_{i3}))} \\[2ex] w_{i3} = \dfrac{1}{1/D(E_{i3})(1/D(E_{i1}) + 1/D(E_{i2}) + 1/D(E_{i3}))} \end{cases} \quad (14)$$

In the expression (14), $w_{i1}$, $w_{i2}$, $w_{i3}$ may serve as the basic probability distribution function of the evidence set i (i.e., a fault category). According to the above-described fusion method, the decision-level fusion is performed by weight distribution on the diagnosis results of the three models, and the final expression of the fault diagnosis confidence of the main drive electric motor is obtained as follows:

$$Y = w_1 \times Y_{tree} + w_2 \times Y_{SVM} + w_3 \times Y_{BP} \quad (15)$$

In the expression (15), Y is the fault diagnosis result confidence parameter obtained after algorithm fusion, $w_i$ is the weight value obtained after fusion of three algorithms, and $Y_{tree}$, $Y_{SVM}$, $Y_{BP}$ are the fault diagnosis parameters obtained by a fault tree method, SVM and BPNN respectively.

In some embodiments, the fault diagnosis method further includes: judging whether the state feature data and the fused fault diagnosis parameters conform to an alarm threshold set by a rule-based state alarm model, and performing alarming by a visual terminal when the alarm threshold is exceeded.

The rule-based state alarm model sets an alarm threshold for each member in each working system, wherein the alarm threshold is generally set according to a national standard or the Pauta criterion method and $q = u \pm k\sigma$; U represents a mean value, $\sigma$ represents a standard deviation, and k is an alarm coefficient, and $k \geq 3$ is desirable. After the diagnosis results (for example, normal, early warning and fault alarm) are output from the diagnosis model, the alarm or diagnosis results may be presented by a visual terminal.

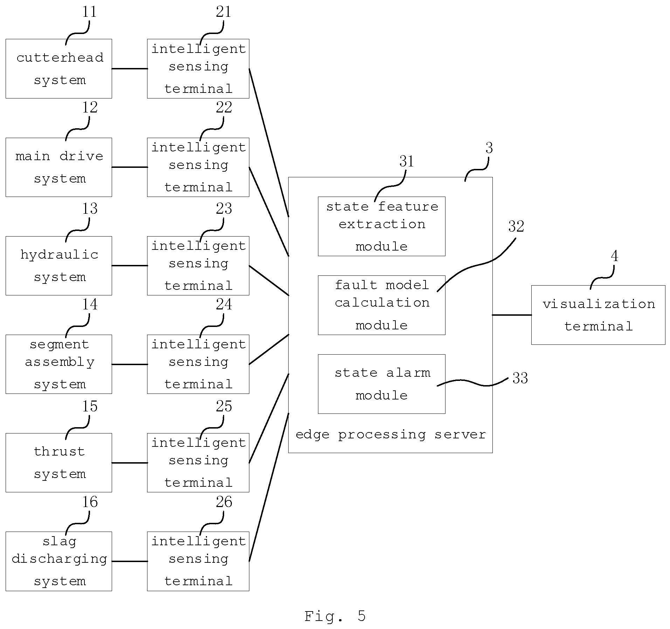

Fig. 5 is a schematic structural view of some embodiment of an intelligent tunneling equipment accord to the present disclosure. Referring to Fig. 5 and various embodiments of the aforementioned fault diagnosis method for a tunneling equipment, the embodiment of the present disclosure also provides an intelligent tunneling equipment, which includes: a plurality of working systems, a plurality of intelligent sensing terminals and an edge processing server 3. In some embodiments, the plurality of working systems may include at least one of a cutterhead system 11, a main drive system 12, a hydraulic system 13, a segment assembly system 14, a thrust system 15 and a slag discharging system 16, wherein the plurality of intelligent sensing terminals 21, 22, 23, 24, 25 and 26 may correspond to the cutterhead system 11, the main drive system 12, the hydraulic system 13, the segment assembly system 14, the thrust system 15 and the slag discharging system 16 respectively.

The intelligent sensing terminal is configured to acquire the operational data of a corresponding working system and preprocess the operational data. The edge processing server 33 is communicatively connected with the plurality of intelligent sensing terminals, and configured to perform feature analysis on the preprocessed operational data to obtain state feature data, perform operation on the state feature data by using a plurality of fault models, and perform weight matching on fault diagnosis parameters output by the fault models to obtain fused fault diagnosis parameters.

For each working system, the operational data in each working system may aggregated at a corresponding intelligent sensing terminal. The terminal may have a plurality of communication protocols to collect different types of data information and write them into the same data file. The intelligent sensing terminal may be provided with a plurality of core processors, and the data collection parameters such as collection frequency and duration of different sensors may be controlled by programming.

The intelligent sensing terminal may further include a data preprocessing module. The data preprocessing module is configured to preprocess the operational data. The data is processed for example by cleaning and noise reduction so as to transmit the data to the edge processing server 3 for further analysis. This intelligent sensing terminal may avoid the problem that different types of sensors need different devices such as collectors and gateways at present, which is conductive to the standardization of data collection.

In some embodiments, the cutterhead system 11 may include: a cutterhead and a cutterhead data acquiring unit for acquiring the operational data of the cutterhead; and a cutter and a cutter data acquiring unit for acquiring the operational data of the cutter.

The cutterhead data acquiring unit may include: a main control room controller for acquiring at least one of a cutterhead rotation speed, a cutterhead torque and the thrust information. The cutter data acquiring unit may include: at least one of a cutter rotation speed sensor, a cutter wear sensor and a cutterhead temperature sensor.

The cutter rotation speed sensor may be integrated on a hob tool box, and a magnetic sensor may be generally used to obtain the cutter rotation speed data. The cutter wear sensor may be integrated on the tool box, and a non-contact sensor such as eddy current may be used to obtain a wear, which may also be measured by a visual camera. The cutterhead temperature sensor may be in the form of thermocouple, and distributed inside the cutter beam to obtain a temperature of the cutterhead panel during a tunneling process, and may also use an infrared thermometer to perform non-contact measurement. The power supply of each sensor may be wired power supply or battery power supply, wherein the wired power supply performs power supply through an electric slip ring to ensure normal power supply when the cutterhead rotates; when power is supplied by a battery, the battery and the sensor are packaged together on the tool box or the cutterhead panel.

In some embodiments, the main drive system 12 includes: a main bearing and a main bearing data acquiring unit for acquiring the operational data of the main bearing; a main drive electric motor and an electric motor data acquiring unit for acquiring the operational data of the main drive electric motor; a main reducer and a reducer data acquiring unit for acquiring the operational data of the main reducer; a lubricant supply mechanism and a lubricant data acquiring unit for acquiring the operational data of a lubricant; and a main drive seal and a seal data acquiring unit for acquiring the operational data of the main drive seal.

The main bearing data acquiring unit may include: at least one of a bearing inner ring displacement sensor, a radial roller vibration sensor, an thrust roller vibration sensor, a reverse thrust roller vibration sensor, a bearing temperature sensor, a stress-strain sensor and a bearing rotation speed sensor.

The bearing inner ring displacement sensor is configured to acquire the axial vibration information of the bearing inner ring, and an ultrasonic ranging sensor or an eddy current displacement sensor may be used.

The radial roller vibration sensor may use a contact vibration sensor. By opening a hole in the drive box, the sensor may be directly mounted and fixed at the position where the bearing outer ring is directly opposite to the radial roller runway, so as to obtain a maximum vibration energy. Since the bearing has a large size, the number of sensors is generally not less than 8, with immediately above the bearing as a zero point, and all the sensors are evenly arranged in a circumference.

The thrust roller vibration sensor may use a contact vibration sensor. By opening a hole in the drive box, the sensor may be directly mounted and fixed at the position where the bearing outer ring is directly opposite to the thrust roller runway, so as to obtain a maximum vibration energy. Since the bearing has a large size, the number of sensors is generally not less than 8, with right above the bearing as a zero point, and all the sensors are evenly arranged in a circumference.

The reverse thrust roller vibration sensor may use a contact vibration sensor. By opening a hole in the drive box, the sensor is directly mounted and fixed at the position where the bearing outer ring is directly opposite to the reverse thrust roller runway, so as to obtain a maximum vibration energy. Since the bearing has a large size, the number of sensors is generally not less than 8, with right above the bearing as a zero point, and all the sensors are evenly arranged in a circumference.

The bearing temperature sensors may be evenly distributed at the position of the bearing outer ring proximate to the runway of each roller so as to obtain the bearing temperature data. The distribution number of the temperature sensors is obtained by thermal simulation of the bearing, and mainly distributed in an intermediate position of a maximum value, a minimum value and an extreme value of a simulated temperature, and the number of temperature sensors is generally not less than 8.

The stress-strain sensors may be distributed at the position of the bearing outer ring proximate to the runway of each roller so as to obtain the stress-strain information due to a load change during the working process of the bearing; the number of stress-strain sensors is generally not less than 8, with one distributed respectively at an initial area of the soft strip segment and the middle of the soft strip as much as possible in the vicinity of the soft strip position of the bearing runway. The sensor may use a strain gauge with a temperature compensation function, or design a half-bridge or full-bridge strain circuit with a temperature compensation function.

The bearing rotation speed sensor obtains the rotation speed information of the bearing inner ring, which may be acquired by a non-contact eddy current sensor.

The electric motor data acquiring unit may include: a main control room controller for acquiring at least one of an electric motor current and an electric motor temperature, and an electric motor vibration sensor. The electric motor vibration sensor may use a contact type, and a single electric motor may be optimally provided with three vibration sensors, two of which are mounted orthogonally on the electric motor housing directly opposite to a radial direction of the bearing, and one is mounted at the electric motor tail parallel to the electric motor shaft. The radial sensor is configured to judge the fault information of the electric motor support bearing, and the axial sensor is configured to judge the connection state information of the electric motor and the reducer.

The main reducer data acquiring unit may include: a main control room controller for acquiring a temperature of the main reducer, and a reducer vibration sensor. The reducer vibration sensor may be mounted in a contact manner, and mounted on a housing in a radial direction of the reducer retainer, and two reducer vibration sensors are arranged orthogonally in a circumferential direction of each stage of transmission retainer, for example, six reducer vibration sensors are mounted in triple stage reduction.

The lubricant data acquiring unit may include a lubricant sensor. The lubricant sensor may measure the ferromagnetic abrasive content, water content, contamination degree, viscosity, temperature and other indicators of a lubricant. The oil inlet of the sensor may be connected to the drive box, and the oil outlet is connected to the oil return circuit of the drive box.

The seal data acquiring unit may include: at least one of a seal track thickness measurement sensor, a seal cavity internal temperature and pressure sensor, a seal member wear measurement sensor and a seal maze clearance measurement sensor. The seal track thickness measurement sensor, the seal cavity internal temperature and pressure sensor, the seal member wear measurement sensor and the seal maze clearance measurement sensor may all be mounted at the main drive seal.

In some embodiments, the hydraulic system 13 includes: a hydraulic pump and a hydraulic pump data acquiring unit for acquiring the operational data of the hydraulic pump; a hydraulic pump electric motor and a hydraulic pump electric motor acquiring unit for acquiring the operational data of the hydraulic pump electric motor; a hydraulic oil data acquiring unit for acquiring the operational data of hydraulic oil; and a control valve and a control valve data acquiring unit for acquiring the operational data of the control valve.

The hydraulic pump data acquiring unit may include: at least one of a vibration sensor, a pressure pulse sensor (the pressure sampling frequency may be greater than or equal to 1000Hz) and a low-frequency pressure sensor (a pressure value of a measurement system) mounted on the hydraulic pump. The vibration sensor obtains a vibration signal of the hydraulic pump, and the pressure pulse sensor obtains a pressure fluctuation signal of hydraulic oil in the pump.

The hydraulic pump electric motor acquiring unit may include: a vibration sensor mounted on the hydraulic pump electric motor. Generally, three vibration sensors are installed, two of which are arranged orthogonally on the circumference of the electric motor housing and one is arranged axially at the tail of the electric motor.

The hydraulic oil data acquiring unit may include a hydraulic oil sensor. The hydraulic oil sensor is connected with the hydraulic oil pipeline and configured to collect data such as viscosity, temperature, contamination degree and ferromagnetic particles of hydraulic oil. The control valve data acquiring unit may include a valve controller for acquiring a spool displacement signal and an instruction signal.

In some embodiments, the segment assembly system 14 includes: an assembling hydraulic motor and an assembling motor data acquiring unit for acquiring the operational data of the assembling hydraulic motor; an assembling drive electric motor and an assembling electric motor data acquiring unit for acquiring the operational data of the assembling drive electric motor; and an assembling reducer and an assembling reducer data acquiring unit for acquiring the operational data of the assembling reducer.

The assembling motor data acquiring unit may include: at least one of a vibration sensor, a pressure pulse sensor and a low-frequency pressure sensor mounted on the assembling motor. The assembling electric motor data acquiring unit may include: a main control room controller for acquiring at least one of an electric motor current and an electric motor temperature of the assembling drive electric motor, and an assembling electric motor vibration sensor. The assembling reducer data acquiring unit may include: a main control room controller for acquiring an assembling reducer temperature, and an assembling reducer vibration sensor.

In some embodiments, the thrust system 15 includes: a thrust cylinder and a thrust data acquiring unit for acquiring the operational data of the thrust cylinder. The thrust data acquiring unit includes: at least one of a cylinder stroke sensor and a cylinder pressure sensor. The cylinder stroke sensor may be configured to acquire the displacement stroke information of the cylinder, and the cylinder pressure sensor may be configured to acquire the pressure information of a rod end cavity/a cap end cavity of the cylinder.

In some embodiments, the slag discharging system 16 includes: a screw conveyor and a screw conveying data acquiring unit for acquiring the operational data of the screw conveyor; and a belt conveyor and a belt conveying data acquiring unit for acquiring the operational data of the belt conveyor.

The screw conveying data acquiring unit may include: at least one of a wear sensor, a gate displacement sensor and a gate pressure sensor. The wear sensor is configured to acquire the housing thickness information of the screw conveyor. The gate displacement sensor is configured to acquire a gate opening and closing amount of the screw conveyor. The gate pressure sensor is configured to acquire the gate pressure data.

The belt conveying data acquiring unit may include: at least one of a deviation detection sensor and a vibration sensor mounted on the belt conveyor. The vibration sensor is mounted on the electric motor or reducer of the belt conveyor to obtain the vibration data. The deviation detection sensor is configured to acquire the deviation data of the belt conveyor.

In some embodiments, the data preprocessing module includes: an abnormality filtering unit and a stable segment screening unit. The abnormality filtering unit is configured to filter out the data portion corresponding to an abnormal working state from the operational data so as to obtain the operational data of the working process. The stable phase screening unit is configured to screen out the operational data corresponding to a stable phase of the tunneling equipment during the tunneling process from the operational data during the working process.

The abnormality filtering unit may be configured to : determine that the operational data pertains to the data portion corresponding to an abnormal working state when any data of a total thrust force, a thrust speed, a cutterhead torque and a cutterhead rotation speed of the tunneling equipment are abnormal.

The stable phase screening unit may be configured to: determine that the operational data pertains to the operational data corresponding to a stable phase of the tunneling equipment during a tunneling process when the standard deviation of the cutterhead rotation speed and the standard deviation of the total thrust force both meet the standard deviation threshold requirements.

In some embodiments, the intelligent sensing terminal may further include an outlier processing module. The outlier processing module is configured to detect an outlier in the operational data corresponding to the stable phase, eliminate the outliers and supplement missing values.

Referring to Fig. 5, in some embodiments, the edge processing server 3 includes: a state feature extraction module 31 and a fault model calculation module 32. The state feature extraction module 31 is configured to perform feature analysis on the preprocessed operational data to obtain state feature data. The fault model calculation module 32 is configured to perform operation on the state feature data by using a plurality of fault models, and perform weight matching on fault diagnosis parameters output by the fault models to obtain fused fault diagnosis parameters.

In some embodiments, the state feature extraction module 31 may include a data analysis unit. The data analysis unit is configured to perform at least one of time domain analysis, frequency domain analysis and time-frequency domain analysis on high-frequency data in the preprocessed operational data, and perform time domain analysis on low-frequency data in the preprocessed operational data to construct a time domain feature set and a frequency domain feature set.

The state feature extraction module 31 may further include a data optimization unit. The data optimization unit is configured to perform dimension reduction on the time domain feature set and the frequency domain feature set for optimization so as to screen out fault-sensitive state features to construct a fault-sensitive state feature set.

In some embodiments, the fault model calculation module 32 may be configured to calculate an error mean and a variance of a fusion confidence according to a confidence corresponding to each fault in the working system calculated by the plurality of fault models and a weight assigned to each fault model, determine the weights respectively corresponding to the plurality of fault models in the case where the condition of a minimum variance of the fusion confidence is satisfied, and then perform weighted calculation according to the fault diagnosis parameters output by the plurality of fault models and the determined weights respectively corresponding to the plurality of fault models to obtain fused fault diagnosis parameters. Preferably, the plurality of fault models include a expert knowledge-based diagnostic reasoning model and a big data-driven neural network for diagnosis and prediction.

Referring to Fig. 5, in some embodiments, the edge processing server 3 further includes a state alarm module 33. The state alarm module 33 is configured to judge whether the state feature data and the fused fault diagnosis parameters conform to an alarm threshold set by a rule-based state alarm model, and alarm is performed by the visualization terminal 4 when an alarm threshold is exceeded.

In Fig. 5, the intelligent tunneling equipment may further include a visualization terminal 4. The visualization terminal 4 is commutatively connected with the edge processing server 3, and configured to display the operational data, provide the diagnostic information and/or send an alarm. The visualization terminal 4 may be at least one of the visualization interfaces developed in PC side, web side and App.

A plurality of embodiments in the present description are described in a progressive manner with different focuses respectively. Cross-reference may be made for the same or similar parts between the respective embodiments. For the embodiments of the device, since the method as a whole and the steps involved therein are in a relationship corresponding to the content in the embodiments of the method, such embodiments are described in a relatively simple manner. For the relevant aspects, reference may be made to some of the descriptions of the embodiments of the method.

Hereto, various embodiments of the present disclosure have been described in detail. Some details well known in the art are not described in order to avoid obscuring the concept of the present disclosure. According to the above description, those skilled in the art would fully understand how to implement the technical solutions disclosed here.

Although some specific embodiments of the present disclosure have been described in detail by way of examples, those skilled in the art should understand that the above examples are only for an illustrative purpose, rather than limiting the scope of the present disclosure. It should be understood by those skilled in the art that modifications to the above embodiments and equivalent replacements to some technical features may be made without departing from the scope and spirit of the present disclosure. The scope of the present disclosure is defined by the appended claims.

**Claims**

1. A fault diagnosis method for a tunneling equipment, comprising:

   step S1: respectively acquiring operational data of a plurality of working systems of the tunneling equipment by means of a plurality of intelligent sensing terminals;
   step S2: preprocessing the operational data;
   step S3: performing feature analysis on preprocessed operational data to obtain state feature data; and
   step S4: perform a calculation on the state feature data by using a plurality of fault models, and performing weight matching on fault diagnosis parameters output by each fault model to obtain a fused fault diagnosis parameter.

2. The fault diagnosis method according to claim 1, wherein the step S2 comprises:

   step S21: filtering out a data portion corresponding to an abnormal working state from the operational data to obtain an operational data of a working process; and
   step S22: screening out operational data corresponding to a stable phase of the tunneling equipment during a tunneling process from the operational data of the working process.

3. The fault diagnosis method according to claim 2, wherein in the step S21, when any data of a total thrust force, a thrust speed, a cutterhead torque and a cutterhead rotation speed of the tunneling equipment are abnormal, it is determined that the operational data pertains to the data portion corresponding to the abnormal working state.

4. The fault diagnosis method according to claim 2 or 3, wherein in the step S22, when a standard deviation of the cutterhead rotation speed and a standard deviation of the total thrust force both meet standard deviation threshold requirements, it is determined that the operational data pertains to the operational data corresponding to the stable phase of the tunneling equipment during the tunneling process.

5. The fault diagnosis method according to any one of claims 2 to 4, wherein the step S2 further comprises:
   step S23: detecting an outlier in the operational data corresponding to the stable phase, eliminating the outliers and supplementing missing values.

6. The fault diagnosis method according to any one of claims 1 to 5, wherein the step S3 comprises:
   step S31: performing at least one of time domain analysis, frequency domain analysis and time-frequency domain analysis on high-frequency data in the preprocessed operational data and performing time domain analysis on low-frequency data in the preprocessed operational data, so as to construct a time domain feature set and a frequency domain feature set.

7. The fault diagnosis method according to claim 6, wherein the step S3 further comprises:
   step S32: performing dimension reduction on the time domain feature set and the frequency domain feature set for optimization, so as to screen out fault-sensitive state features to construct a fault-sensitive state feature set.

8. The fault diagnosis method according to any one of claims 1 to 7, wherein the step S4 comprises:

   step S41: calculating an error mean and a variance of a fusion confidence according to a confidence corresponding to each fault in the working system calculated by the plurality of fault models and a weight allocated to each fault model;
   step S42: determining the weights corresponding to the plurality of fault models respectively in the case where a condition of a minimum variance of the fusion confidence is satisfied; and
   step S43: performing a weighted calculation according to the fault diagnosis parameters output by the plurality of fault models and determined weights corresponding to the plurality of fault models respectively, so as to obtain fused fault diagnosis parameters.

9. The intelligent tunneling equipment according to claim 8, wherein the plurality of fault models comprise an expert knowledge-based diagnostic reasoning model and a big data-driven neural network for diagnosis and prediction.

10. The fault diagnosis method according to any one of claims 1 to 9, further comprising:
judging whether the state feature data and the fused fault diagnosis parameters conform to an alarm threshold set by a rule-based state alarm model, and performing alarming by a visual terminal when the alarming threshold is exceeded.

11. An intelligent tunneling equipment, comprising:

a plurality of working systems;
a plurality of intelligent sensing terminals respectively corresponding to the plurality of working systems, and configured to acquire the operational data of a corresponding working system and preprocess the operational data; and
an edge processing server communicatively connected with the plurality of intelligent sensing terminals, and configured to perform feature analysis on the preprocessed operational data to obtain state feature data, perform a calculation on the state feature data by using a plurality of fault models, and perform weight matching on fault diagnosis parameters output by the fault models to obtain fused fault diagnosis parameters.

12. The intelligent tunneling equipment according to claim 11, wherein the plurality of working systems comprise at least one of a cutterhead system, a main drive system, a hydraulic system, a segment assembly system, a thrust system and a slag discharging system.

13. The intelligent tunneling equipment according to claim 12, wherein the cutterhead system comprises:

a cutterhead and a cutterhead data acquiring unit for acquiring operational data of the cutterhead; and
a cutter and a cutter data acquiring unit for acquiring operational data of the cutter.

14. The intelligent tunneling equipment according to claim 13, wherein the cutterhead data acquiring unit comprises a main control room controller for acquiring at least one of a cutterhead rotation speed, a cutterhead torque and thrust information; and the cutter data acquiring unit comprises : at least one of a cutter rotation speed sensor, a cutter wear sensor and a cutterhead temperature sensor.

15. The intelligent tunneling equipment according to any one of claims 12 to 14, wherein the main drive system comprises:

a main bearing and a main bearing data acquiring unit for acquiring operational data of the main bearing;
a main drive electric motor and an electric motor data acquiring unit for acquiring operational data of the main drive electric motor;
a main reducer and a reducer data acquiring unit for acquiring operational data of the main reducer;
a lubricant supply mechanism and a lubricant data acquiring unit for acquiring operational data of a lubricant; and
a main drive seal and a seal data acquiring unit for acquiring operational data of the main drive seal.

16. The intelligent tunneling equipment according to claim 15, wherein the main bearing data acquiring unit comprises: at least one of a bearing inner ring displacement sensor, a radial roller vibration sensor, a thrust roller vibration sensor, a reverse thrust roller vibration sensor, a bearing temperature sensor, a stress-strain sensor and a bearing rotation speed sensor; the electric motor data acquiring unit comprises : a main control room controller for acquiring at least one of an electric motor current and an electric motor temperature, and an electric motor vibration sensor; the main reducer data acquiring unit comprises: a main control room controller for acquiring a temperature of the main reducer, and a reducer vibration sensor; the lubricant data acquiring unit comprises a lubricant sensor; the seal data acquiring unit comprises: at least one of a seal track thickness measurement sensor, a seal cavity internal temperature and pressure sensor, a seal member wear measurement sensor and a seal maze clearance measurement sensor.

17. The intelligent tunneling equipment according to any one of claims 12 to 16, wherein the hydraulic system comprises:

a hydraulic pump and a hydraulic pump data acquiring unit for acquiring operational data of the hydraulic pump;
a hydraulic pump electric motor and a hydraulic pump electric motor acquiring unit for acquiring operational data of the hydraulic pump electric motor;
a hydraulic oil data acquiring unit for acquiring operational data of hydraulic oil; and
a control valve and a control valve data acquiring unit for acquiring operational data of the control valve.

18. The intelligent tunneling equipment according to claim 17, wherein the hydraulic pump data acquiring unit comprises: at least one of a vibration sensor, a pressure pulse sensor and a low-frequency pressure sensor which are mounted on the hydraulic pump; the hydraulic pump electric motor acquiring unit comprises: a vibration sensor mounted on the hydraulic pump electric motor; the hydraulic oil data acquiring unit comprises a hydraulic oil sensor; and the control valve data acquiring unit comprises a valve controller.

19. The intelligent tunneling equipment according to any one of claims 12 to 18, wherein the segment assembly system comprises:

an assembling hydraulic motor and an assembling motor data acquiring unit for acquiring operational data of the assembling hydraulic motor;
an assembling drive electric motor and an assembling electric motor data acquiring unit for acquiring operational data of the assembling drive electric motor; and
an assembling reducer and an assembling reducer data acquiring unit for acquiring operational data of the assembling reducer.

20. The intelligent tunneling equipment according to claim 19, wherein the assembling motor data acquiring unit comprises: at least one of a vibration sensor, a pressure pulse sensor and a low-frequency pressure sensor which are mounted on the assembling motor; the assembling electric motor data acquiring unit comprises: a main control room controller for acquiring at least one of an electric motor current and an electric motor temperature of the assembling drive electric motor, and an assembling electric motor vibration sensor; the assembling reducer data acquiring unit comprises: a main control room controller for acquiring an assembling reducer temperature, and an assembling reducer vibration sensor.

21. The intelligent tunneling equipment according to any one of claims 12 to 20, wherein the thrust system comprises : a thrust cylinder and a thrust data acquiring unit for acquiring operational data of the thrust cylinder.

22. The intelligent tunneling equipment according to claim 21, wherein the thrust data acquiring unit comprises: at least one of a cylinder stroke sensor and a cylinder pressure sensor.

23. The intelligent tunneling equipment according to any one of claims 12 to 22, wherein the slag discharging system comprises:

a screw conveyor and a screw conveying data acquiring unit for acquiring operational data of the screw conveyor; and
a belt conveyor and a belt conveying data acquiring unit for acquiring operational data of the belt conveyor.

24. The intelligent tunneling equipment according to claim 23, wherein the screw conveying data acquiring unit comprises: at least one of a wear sensor, a gate displacement sensor and a gate pressure sensor; and the belt conveying data acquiring unit comprises: at least one of a deviation detection sensor and a vibration sensor mounted on the belt conveyor.

25. The intelligent tunneling equipment according to any one of claims 11 to 24, wherein the intelligent sensing terminal comprises:

a data collection module configured to acquire operational data of a corresponding working system through a plurality of communication protocols and adjust data collection parameters of the corresponding working system; and
a data preprocessing module configured to preprocess the operational data.

26. The intelligent tunneling equipment according to claim 25, wherein the data preprocessing module comprises:

an abnormality filtering unit configured to filter out a data portion corresponding to an abnormal working state from the operational data to obtain an operational data during a working process; and
a stable phase screening unit configured to screen out operational data corresponding to a stable phase of the tunneling equipment during a tunneling process from the operational data of the working process.

27. The intelligent tunneling equipment according to claim 26, wherein the abnormality filtering unit is configured to:

determine that the operational data pertains to the data portion corresponding to the abnormal working state when any data of a total thrust force, a thrust speed, a cutterhead torque and a cutterhead rotation speed of the tunneling equipment are abnormal.

28. The intelligent tunneling equipment according to claim 26 or 27, wherein the stable phase screening unit is configured to: determine that the operational data pertains to the operational data corresponding to the stable phase of the tunneling equipment during the tunneling process when a standard deviation of the cutterhead rotation speed and a standard deviation of the total thrust force both meet standard deviation threshold requirements.

29. The intelligent tunneling equipment according to any one of claims 25 to 28, wherein the intelligent sensing terminal further comprises:
an outlier processing module configured to detect an outlier in the operational data corresponding to the stable phase, eliminate the outliers and supplement missing values.

30. The intelligent tunneling equipment according to any one of claims 11 to 29, wherein the edge processing server comprises:

a state feature extraction module configured to perform feature analysis on the preprocessed operational data to obtain state feature data; and
a fault model calculation module configured to perform a calculation on the state feature data by using a plurality of fault models, and perform weight matching on fault diagnosis parameters output by each fault model to obtain a fused fault diagnosis parameter.

31. The intelligent tunneling equipment according to claim 30, wherein the state feature extraction module comprises:
a data analysis unit configured to perform at least one of time domain analysis, frequency domain analysis and time-frequency domain analysis on high-frequency data in the preprocessed operational data, and perform time domain analysis on low-frequency data in the preprocessed operational data, so as to construct a time domain feature set and a frequency domain feature set.

32. The intelligent tunneling equipment according to claim 31, wherein the state feature extraction module further comprises:
a data optimization unit configured to perform dimension reduction on the time domain feature set and the frequency domain feature set for optimization so as to screen out fault-sensitive state features to construct a fault-sensitive state feature set.

33. The intelligent tunneling equipment according to any one of claims 11 to 32, wherein the fault model calculation module is configured to calculate an error mean and a variance of a fusion confidence according to a confidence corresponding to each fault in the working system calculated by the plurality of fault models and a weight assigned to each fault model, and determine the weights corresponding to the plurality of fault models respectively in the case where a condition of a minimum variance of the fusion confidence is satisfied, and then performing a weighted calculation according to the fault diagnosis parameters output by the plurality of fault models and determined weights respectively corresponding to the plurality of fault models to obtain fused fault diagnosis parameters.

34. The intelligent tunneling equipment according to claim 33, wherein the plurality of fault models comprise an expert knowledge-based diagnostic reasoning model and a big data-driven neural network for diagnosis and prediction.

35. The intelligent tunneling equipment according to any one of claims 11 to 34, wherein the edge processing server further comprises:
a state alarm module configured to judge whether the state feature data and the fused fault diagnosis parameters conform to an alarm threshold set by a rule-based state alarm model, and perform alarming by a visual terminal when the alarm threshold is exceeded.

36. The intelligent tunneling equipment according to any one of claims 11 to 35, further comprising:
a visualization terminal communicatively connected with the edge processing server and configured to display the operational data, provide diagnostic information and/or send an alarm.

| respectively acquiring operational data of a plurality of working systems of the tunneling equipment by means of a plurality of intelligent sensing terminals | S1 |

↓

| preprocessing the operational data by means of the plurality of intelligent sensing terminals | S2 |

↓

| performing feature analysis on preprocessed operational data to obtain state feature data by means of an edge processing server | S3 |

↓

| by means of the edge processing server, perform a calculation on the state feature data by using a plurality of fault models, and performing weight matching on fault diagnosis parameters output by each fault model to obtain a fused fault diagnosis parameter | S4 |

Fig. 1

filtering out a data portion corresponding to an abnormal working state from the operational data to obtain an operational data of a working process by means of the intelligent sensing terminals ⟩ S21

screening out operational data corresponding to a stable phase of the tunneling equipment during a tunneling process from the operational data of the working process by means of the intelligent sensing terminals ⟩ S22

detecting an outlier in the operational data corresponding to the stable phase, eliminating the outliers and supplementing missing values by means of the intelligent sensing terminals ⟩ S23

Fig. 2

performing at least one of time domain analysis, frequency domain analysis and time-frequency domain analysis on high-frequency data in the preprocessed operational data and performing time domain analysis on low-frequency data in the preprocessed operational data, so as to construct a time domain feature set and a frequency domain feature set ⟩ S31

performing dimension reduction on the time domain feature set and the frequency domain feature set for optimization, so as to screen out fault-sensitive state features to construct a fault-sensitive state feature set ⟩ S32

Fig. 3

calculating an error mean and a variance of a fusion confidence according to a confidence corresponding to each fault in the working system calculated by the plurality of fault models and a weight allocated to each fault model    〜S41

determining the weights corresponding to the plurality of fault models respectively in the case where a condition of a minimum variance of the fusion confidence is satisfied    〜S42

performing a weighted calculation according to the fault diagnosis parameters output by the plurality of fault models and determined weights corresponding to the plurality of fault models respectively, so as to obtain fused fault diagnosis parameters    〜S43

Fig. 4

Fig. 5

## INTERNATIONAL SEARCH REPORT

| International application No. |
| --- |
| **PCT/CN2023/074531** |

| **A.** | **CLASSIFICATION OF SUBJECT MATTER** |
| --- | --- |

G01M13/00(2019.01)i

According to International Patent Classification (IPC) or to both national classification and IPC

| **B.** | **FIELDS SEARCHED** |
| --- | --- |

Minimum documentation searched (classification system followed by classification symbols)

IPC： G01M, G06K， G06F

Documentation searched other than minimum documentation to the extent that such documents are included in the fields searched

Electronic data base consulted during the international search (name of data base and, where practicable, search terms used)

CNABS, VEN, CNKI: 故障, 诊断, 盾构, 掘进, 权重, 融合, 神经网络, fault, diagnosis, shield, excavat, weight, fusion, neural, network

| **C.** | **DOCUMENTS CONSIDERED TO BE RELEVANT** | |
| --- | --- | --- |

| Category* | Citation of document, with indication, where appropriate, of the relevant passages | Relevant to claim No. |
| --- | --- | --- |
| Y | CN 110987502 A (CHINA RAILWAY CONSTRUCTION HEAVY INDUSTRY CORP., LTD.) 10 April 2020 (2020-04-10)<br>description, specific embodiments, and figures 1-3 | 1-36 |
| Y | CN 103577707 A (SHANGHAI JIAO TONG UNIVERSITY) 12 February 2014 (2014-02-12)<br>description, specific embodiments, and figure 1 | 1-36 |
| A | CN 113776794 A (KUNMING UNIVERSITY OF SCIENCE AND TECHNOLOGY et al.) 10 December 2021 (2021-12-10)<br>entire document | 1-36 |
| A | CN 115392349 A (SANY HEAVY EQUIPMENT CO., LTD.) 25 November 2022 (2022-11-25)<br>entire document | 1-36 |
| A | CN 115437358 A (ARMY ACADEMY OF ARMORED FORCES OF PLA) 06 December 2022 (2022-12-06)<br>entire document | 1-36 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 July 2023** | **12 September 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/074531**

**C.    DOCUMENTS CONSIDERED TO BE RELEVANT**

| Category* | Citation of document, with indication, where appropriate, of the relevant passages | Relevant to claim No. |
|---|---|---|
| A | AU 2021104744 A4 (63963 UNIT OF THE CHINESE PEOPLES LIBERATION ARMY et al.) 30 September 2021 (2021-09-30)<br>      entire document | 1-36 |
| A | CN 104215323 A (AIR FORCE ENGINEERING UNIVERSITY OF PLA) 17 December 2014 (2014-12-17)<br>      entire document | 1-36 |
| A | MY 171633 A (UNIVERSITI TEKNOLOGI PETRONAS) 22 October 2019 (2019-10-22)<br>      entire document | 1-36 |

Form PCT/ISA/210 (second sheet) (July 2022)

**INTERNATIONAL SEARCH REPORT**
Information on patent family members

| International application No. |
| --- |
| **PCT/CN2023/074531** |

| Patent document<br>cited in search report | | | Publication date<br>(day/month/year) | Patent family member(s) | Publication date<br>(day/month/year) |
| --- | --- | --- | --- | --- | --- |
| CN | 110987502 | A | 10 April 2020 | None | |
| CN | 103577707 | A | 12 February 2014 | None | |
| CN | 113776794 | A | 10 December 2021 | None | |
| CN | 115392349 | A | 25 November 2022 | None | |
| CN | 115437358 | A | 06 December 2022 | None | |
| AU | 2021104744 | A4 | 30 September 2021 | None | |
| CN | 104215323 | A | 17 December 2014 | None | |
| MY | 171633 | A | 22 October 2019 | None | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211595269X